**Europäisches Patentamt**

**European Patent Office**

**Office européen des brevets**

(19)

(11) Veröffentlichungsnummer: **0 082 497**
A1

# (12) EUROPÄISCHE PATENTANMELDUNG

(21) Anmeldenummer: 82111726.4

(22) Anmeldetag: 17.12.82

(51) Int. Cl.³: **C 09 D 5/28**
C 09 D 17/00, C 09 C 3/06
C 09 C 1/28

(30) Priorität: 19.12.81 DE 3150483

(43) Veröffentlichungstag der Anmeldung:
29.06.83 Patentblatt 83/26

(84) Benannte Vertragsstaaten:
AT BE CH DE FR GB IT LI NL SE

(71) Anmelder: Herberts Gesellschaft mit beschränkter Haftung
Christbusch 25
D-5600 Wuppertal 2(DE)

(72) Erfinder: Graetz, Hans-Joachim, Dr. Dipl.-Chem.
Emanuel-Felke-Strasse 41
D-5600 Wuppertal 12(DE)

(72) Erfinder: Stranghöner, Dieter, Dr. Dipl.-Chem.
Hobeuken 36
D-4322 Sprockhövel 2(DE)

(72) Erfinder: Rauscher, Gerhard, Dr. Dipl.-Chem.
Senefelderstrasse 17
D-8460 Schwandorf(DE)

(72) Erfinder: Bähr, Gabriele
Hahnerbergerstrasse 152
D-5600 Wuppertal 12(DE)

(74) Vertreter: Türk, Dietmar, Dr. rer. nat. et al,
Redies, Redies, Türk & Gille Patentanwälte
Brucknerstrasse 20
D-4000 Düsseldorf 13(DE)

(54) **Wässriges Anstrichmittel, damit versehener Gegenstand und Verwendung von Interferenzpigmenten hierfür.**

(57) Wäßriges Anstrichmittel mit Metallglanzeffekt enthaltend organische Bindemittel, Farbstoffe und/oder Farbpigmente sowie gegebenenfalls übliche lacktechnische Zusatzstoffe, wobei das Anstrichmittel Interferenzpigmente aus mit Titandioxid beschichteten Glimmerplättchen enthält, so erhaltene mit einem Anstrichmittelüberzug aus einem Anstrichmittel versehene Gegenstände sowie die Verwendung von Interferenzpigmenten aus mit Titandioxid beschichteten Glimmerplättchen als Metallglanzeffektpigment für wäßrige Anstrichmittel.

EP 0 082 497 A1

Anmelder: HERBERTS, Gesellschaft mit beschränkter
Haftung, Christbusch 25, D-5600 WUPPERTAL 2

Wäßriges Anstrichmittel, damit versehener Gegenstand
und Verwendung von Interferenzpigmenten hierfür

Die vorliegende Erfindung betrifft ein wäßriges Anstrichmittel mit Metallglanzeffekt enthaltend organische Bindemittel, Farbstoffe und/oder Farbpigmente sowie gegebenenfalls übliche lacktechnische Zusatzstoffe.

Wäßrige Anstrichmittel der oben beschriebenen Art werden in großem Umfang eingesetzt zum Anstreichen von Gegenständen aller Art einschließlich Gebäuden, bzw. deren Wänden innen und außen, Tapeten, Bedarfs- und Gebrauchsgegenstände usw. Diese wäßrigen Anstrichmittel enthalten organische Bindemittel, die in der Regel in Form einer Dispersion in dem wäßrigen Anstrichmittelmedium vorliegen. Das wäßrige Anstrichmittelmedium kann dabei in geringem Umfang auch organische Lösungsmittel mit-enthalten, wobei deren Menge in der Regel nicht mehr als 30 Gew.%, bezogen auf die Gesamtmenge an Lösungsmittel beträgt. Mit derartigen Anstrichfarben kann man durch Auswahl der Farbpigmente und/oder Farbstoffe Farben jeder beliegenden Nuance herstellen.

Bei Verwendung von Anstrichmitteln auf Basis organischer Lösungsmittel allein ist es möglich auch sogenannte Metalleffektlacke herzustellen, die auf dem lackierten Gegenstand einen Überzug ergeben, der einen metallischen Glanz aufweist.

Dieser Metallic-Effekt oder Metall-Effekt wird dadurch erzielt, daß die Anstrichmittel auf Basis organischer Lösungsmittel Metallpulver enthalten. Als Metallpulver werden in den meisten Fällen bevorzugt sogenannte plättchenförmige Metallpulver, insbesondere Aluminium des sogenannten "Leafing-Typs" eingesetzt. Wie bereits dargelegt, werden jedoch als organische Bindemittel für diese Metallic-Anstrichmittel nur solche verwendet, die in organischen Lösungsmittel löslich sind, da der Einsatz von Wasser als Lösungsmittel nicht möglich ist, denn die genannten Metallpulver werden in wäßrigem Medium aufgrund der vorhandenen pH-Werte im alkalischen oder manchmal auch im sauren Bereich zumindest teilweise angelöst. Die Verwendung organischer Lösungsmittel hat die bekannten Nachteile: Brennbarkeit, Umweltverschmutzung durch Abdunsten usw. Es besteht deshalb ein großes Bedürfnis danach, Anstrichmittel mit Metallglanzeffekt zu schaffen, die vollständig oder überwiegend Wasser als Lösungsmittel enthalten.

Im übrigen verbietet sich beim Anstrich von Innenräumen von Gebäuden die Verwendung von Anstrichmitteln, die wesentliche Mengen an Lösungsmittel enthalten. Hierfür können aus verständlichen Gründen nur wäßrige Anstrichmittel, sogenannte Dispersionsfarben eingesetzt werden.

Der vorliegenden Erfindung liegt deshalb die Aufgabenstellung zugrunde ein wäßriges Anstrichmittel mit Metallglanzeffekt zu finden. Es wurde gefunden, daß diese Aufgabenstellung in überraschend einfacher Weise dadurch gelöst werden kann, daß die wäßrigen Anstrichmittel die nachfolgend definierten an sich bekannten Metallglanzpigmente enthalten.

Gegenstand der Erfindung ist demgemäß ein wäßriges Anstrichmittel mit Metallglanzeffekt enthaltend organische Lösungsmittel, Farbstoffe und/oder Farbpigmente sowie gegebenenfalls übliche lacktechnische Zusatzstoffe, das dadurch gekennzeichnet ist, daß es Interferenzpigmente aus mit Titandioxid beschichteten Glimmerplättchen enthält.

Weiterhin betrifft die vorliegende Erfindung mit diesem Anstrichmittel versehene Gegenstände.

Außerdem betrifft die vorliegende Erfindung die Verwendung der oben definierten Interferenzpigmente als Metallglanzeffekt-Pigmente für wäßrige Anstrichmittel.

Gegenstände, die gemäß dem Verfahren der Erfindung mit einem Metallglanzeffekt-Pigmente enthaltenden wäßrigen Anstrichmittel versehen werden können, sind die gleichen, wie sie bisher mit wäßrigen Anstrichmitteln , insbesondere Dispersionsfarben, versehen werden können. Es wird insofern auf den oben erwähnten Stand der Technik verwiesen. Besonders vorteilhaft können die Anstrichmittel gemäß der Erfindung eingesetzt werden zum Anstreichen von Innen- und Außenwänden von Gebäuden sowie Fenstern und Türen und sonstigen Gebäudebestandteilen, wie Dachrinnen. Die Innenwände können tapeziert sein, und die Tapeten können mit dem Anstrichmittel gemäß der Erfindung überstrichen werden. Es ist auch möglich, Tapeten-Papierbahnen mit dem Anstrichmittel der Erfindung zu streichen, diese wie übliche Tapeten aufzurollen und später zum Tapezieren einzusetzen. Gleichmaßen können Kunststoff-Folien mit dem Anstrichmittel der Erfindung gestrichen werden.

Das wesentliche Merkmale der Anstrichmittel der Erfindung liegt darin, daß sie die oben definierten Interferenzpigmente enthalten. Diese sind an sich bekannt (vgl. u.a. DE-B 14 67 468 und DE-A 1 959 998).

Es handelt sich um Glimmerschuppenpigmente, bei denen sich auf durchscheinenden Glimmerschuppen ein Überzug aus Titandioxid befindet. Die Beschichtung mit Titandioxid weist eine solche Stärke auf, daß eine Interferenz in einer bestimmten gewünschten Wellenlänge oder einem gewünschten Wellenlängenbereich erzeugt wird. Die Glimmerschuppen weisen eine verhältnismäßig große Breite und Länge im Vergleich zur Dicke auf. Die Länge der einzelnen Glimmerschuppen liegt im Bereich von etwa 5 bis 150 um, die Breite im Bereich von etwa 5 bis 150 um und die Dicke im Bereich von etwa 150 bis 400 nm. Die Stärke der Titandioxidbeschichtung liegt im Bereich von etwa 40 bis 300 nm.

Die Länge bzw. Breite der Glimmerplättchen ist wesentlich größer als deren Dicke, während die großen Flächen eine positive Ladung aufweisen, haben die schmalen Seitenflächen eine negative Ladung. Dies hat zur Folge, daß an den Schmalseiten dieser Plättchen praktisch keine Beschichtung mit Titandioxid erfolgt.

Geeignete Interferenzpigmente sind zum Beispiel die als Handelsprodukte von der Firma Merck, Darmstadt, Bundesrepublik Deutschland, unter dem eingetragenen Warenzeichen Iriodin vertriebenen Produkte mit den Typennummern 121, 101, 105, 205, 215, 217, 225, 235 und 400.

Beispiele für wasserverdünnbare Bindemittel sind wäßrige Acrylat- oder Acrylat-Styrol-Dispersionen bzw.-lösungen, Polyurethan-Dispersionen, ungesättigte Polyesterharze, säurehärtende Lacksysteme, luft-trocknende Alkydharze, Vinylpropionat-Acrylat-Dispersionen, Copolymerisate aus Vinylacetat und Maleinsäure-di-n-butylester, Copolymerisate aus Vinylacetat und Versaticsäurevinylester, PVC-Dispersionen, Styrol-Butadien-Copolymerisate usw. In grundsätzlicher Beziehung können sowohl alle organischen Bindemittel, wie sie bisher für wäßrige Anstrichmittel umgesetzt wurden (insbesondere sogenannte Dispersionen) als auch anorganische Bindemittel, wie z.B. wasserverdünnbare Silikatbindemittel, eingesetzt werden.

Das Lösungsmittel besteht zu 70 bis 100 Gew.-% , vorzugsweise zu mindestens 80 Gew.% , und besonders bevorzugt zu mindestens 85 Gew.%, bezogen auf die Gesamtmenge des Lösungsmittels, aus Wasser. Der restliche Anteil, soweit er vorhanden ist, besteht aus mit Wasser mischbaren organischen Lösungsmitteln. Beispiele hierfür sind geradkettige und verzweigte aliphatische Alkohole mit 1 bis 4 Kohlenstoffatomen, insbesondere Isopropanol und es können auch Glykole oder Glykolether eingesetzt werden, wie Butylglykol, Propylenglykol, Methylenglykol, Butylglykolisobutyl-ether. Der Zusatz der organischen Lösungsmittel bewirkt ein schnelleres Abdunsten und einen gleich-mäßigeren Anstrichfilm.

Das Anstrichmittel gemäß der Erfindung enthält außerdem wie die bekannten Anstrichmittel Farbstoffe und/ oder Farbpigmente, um den gewünschten Farbton zu erzeugen. Die diesbezüglichen bekannten Farbstoffe und/oder Pigmente können eingesetzt werden. Beispiele hierfür sind wasser- und öllösliche Farbstoffe sowie Pigmente, die im Handel häufig als Pigmentpasten erhältlich sind. Dabei ist es sowohl möglich, eine Farbgebung einzustellen, die dem Aussehen einer Metalloberfläche entspricht, als auch der Oberfläche beliebige Farbnuancen zu verleihen, die einen metallischen
Glanz aufweisen. Zur Erzeugung eines Goldglanzes werden
organische Gelb- oder Rot-Pigmente verwendet (z.B.
C.I.77491 und 71100). Zur Herstellung eines Kupferglanzes eignet sich z.B. Eisenoxid-Rotpigment.

Das Verhältnis zwischen Interferenzpigment und die
Farbgebung verursachenden Farbpigmenten und/oder Farbstoffen liegt im Bereich von etwa 100:1 bis 1:1,
vorzugsweise im Bereich von etwa 50:1 bis 4:1. Der
gewünschte Farbeffekt ist maßgeblich für das jeweils
ausgewählte Mengenverhältnis.

Die Gesamtmenge an Interferenzpigment und Farbstoffen
und/oder Farbpigmenten bezogen auf die Menge an Bindemittel (Festkörpergehalt) beträgt zweckmäßig 1:10 bis
1:1, vorzugsweise etwa 1:7 bis 1:3.

Übliche lacktechnische Zusatzstoffe, die gegebenenfalls
verwendet werden können, sind Füllstoffe, Härtungskatalysatoren, Mittel zur Verbesserung des Verlaufs,
Haftverbesserungsmittel, Antischaummittel und dergleichen. Es können auch geringe Mengen plättchenförmiges Aluminiumpulver zugesetzt werden, sofern die
Menge so gering gehalten wird, daß die Stabilität
der Anstrichmittels nicht wesentlich beeinträchtigt wird.

Die Bestandteile des Anstrichmittels können in üblicher
Weise miteinander vermischt werden. Es ist jedoch
erforderlich, darauf zu achten, daß die gemäß der Erfindung verwendeten Interferenzpigmente dabei ihre
geometrische Form nicht verlieren. Der Einsatz von
z.B. Sandmühlen, wie sie üblicherweise bei der Her-

stellung von pigmenthaltigen Lacken verwendet werden, ist deshalb nicht möglich. Dies stellt aber keinen Nachteil dar, da die Interferenzpigmente in einfacher Weise z.B. mittels eines sogenannten Dissolvers eingearbeitet werden können.

Die Erfindung wird anhand der folgenden Beispiele erläutert: In der nachfolgenden Tabelle 1 sind Bindemittel unter Erwähnung der jeweils eingetragenen Warenzeichen aufgeführt, die gemäß der Erfindung unter anderem eingesetzt werden können, und teilweise in den Beispielen verwendet werden. (Die Abkürzung MFT bedeutet minimale Filmbildungstemperatur).

0082497

TABELLE 1

| Nr.<br>Nr. | Eingetrage-<br>nes Waren-<br>zeichen | Art d. Binde-<br>mittels | Fest-<br>körper | MFT |
|---|---|---|---|---|
| 1 | Primal AC 6501 | Reinacrylatdispersion | 50 | +20°C |
| 2 | Primal AC 4800 | Reinacrylatdispersion | 40 | +52°C |
| 3 | Neocryl XK 70 | Acrylat/Styrol-Disper-<br>sion | 45 | +30°C |
| 4 | Neorez R-962 | Polyurethandispersion | 52 | + 0°C |
| 5 | Vinnapas CEF 10 | Terpolymerisatdisper-<br>sion | 50 | |
| 6 | Zinpol 1519<br>40% W/IPA | Acrylharz-Lösung | 40 | |
| 7 | Roskydal 850 W | Ungesättigtes Poly-<br>esterharz | 100 | |
| 8 | Alkydal F 49 W | Lufttrocknendes<br>Alkydharz | 50 | |
| 9 | Propiofan 590D | Vinylpropionat/Acrylat-<br>Dispersion | 50 | |
| 10 | Mowilith DM 4 | Copol.aus Vinylacetat/<br>Maleinsäure-di-n-butyl-<br>ester | 53 | |
| 11 | Mowilith DM 21 | Copol.aus Vinylacetat/<br>Versaticsäurevinyl-<br>ester | 50 | |
| 12 | Vilit-Disper-<br>sion | PVC-Dispersion | | +20°C |
| 13 | Litex CA | Styrol/Butadien-Copoly-<br>merisat | 50 | |

## Beispiel 1:

### Metalleffekt-Lacke

1.1 Pigmentpasten

Für die Darstellung der Metalleffekt-Lacke werden in den Rezeptbeispielen folgende Pigmentpasten eingesetzt:

1A) Schwarzpaste, bestehend aus:

- 96,72 Gew.-%    Primal AC 6501 (eingetragenes Warenzeichen)
- 1,93 Gew.-%    Russ FW-200 (eingetragenes Warenzeichen)
- 1,35 Gew.-%    Byk Entschäumer-W (eingetragenes Warenzeichen)

1B) Rotpaste, bestehend aus:

- 93,02 Gew.-%    Primal AC 6501
- 5,81 Gew.-%    Sicotransrot L 2715 D (eingetragenes Warenzeichen)
- 1,17 Gew.-%    Byk Entschäumer-W

1C) Rotpaste, bestehend aus:

- 79,20 Gew.-%    Primal AC 6501
- 19,80 Gew.-%    Bayferrox 180-M (eingetragenes Warenzeichen)
- 1,00 Gew.-%    Byk Entschäumer-W

1.2 Metalleffekt Zinn

Zu 60 Gew.-Teilen einer Reinacrylatdispersion Primal AC 6501 werden 5 Gew.-Teile mit Rutil beschichteter Glimmerplättchen (Iriodin 101 Rutilsilber (eingetragenes Warenzeichen) ) und 5 Gew.-

Teile der Schwarzpaste 1A) gegeben. Danach wird 1 Gew.-Teil Byk Entschäumer-W und 1 Gew.-Teil einer 50%igen Lösung des Entschäumers Surfynol 104 (eingetragenes Warenzeichen) in Propandiol-1,2 in diese Mischung eingerührt.

Zur Viskositätskorrektur wird ein Gemisch aus 3 Gew.-Teilen Verdicker Primal RM-8, 3 Gew.-Teilen Ethylenglykolmonobutylether, 10 Gew.-Teilen Propandiol-1,2, 11,80 Gew.-Teilen vollentsalztem Wasser und 0,2 Gew.-Teilen Schimmelverhinderungs-mittel Mergel AF (eingetragenes Warenzeichen) zugesetzt und erneut gut verrührt.

Der so erhaltene Dispersionslack kann nach entsprechender Einstellung auf eine Viskosität von 25 bis 30" 4 DIN 53211 mit vollentsalztem Wasser in konventionellen Spritzverfahren appliziert werden. Das unverdünnte Material läßt sich hervorragend mit der Rolle oder dem Pinsel auftragen.

Die mit diesem Lack erhaltenen Beschichtungen zeichnen sich durch einen gleichmäßigen, seiden-glänzenden, zinnmetallartigen Oberflächeneffekt aus.

1.3 Metalleffekt Messing

Wie in 1.2 beschrieben, werden 60 Gew.-Teile Primal AC 6501 mit 7 Gew.-Teilen Iriodin 205, 0,10 Gew.-Teilen der Schwarzpaste 1A), 0,20 Gew.-Teilen Colanylgelb HR, 0,06 Gew.-Teilen Colanylrot TG und 0,10 Gew.-Teilen Colanylschwarz PR getönt und zur Entschäumung 1 Gew.-Teil Byk Entschäumer-W sowie 1 Gew.-Teil der in 1.2 beschriebenen Surfynol-104-Lösung zugesetzt.

Alle Komponenten werden gut verrührt und mit einer Mischung aus 3 Gew.-Teilen Primal RM-8, 3 Gew.-Teilen Ethylenglykolmonobutylether, 10 Gew.-Teilen Propandiol-1,2 und 14,39 Gew.- Teilen Wasser verdickt.

Zur Konservierung wird wie in 1.2 0,2 Gew.-Teile Mergal AF zugesetzt.

Der Messingeffekt-Lack läßt sich analog zu dem Zinneffekt-Lack auf verschiedene Substrate, wie geschäumtes Polystyrol, Asbestzement, Holz, Tapeten usw., spritzen, rollen und streichen und ergibt so eine messingmetallartige Beschichtung mit einem gleichmäßigen Seidenglanz.

1.4 Metalleffekt Silber

Der Lack setzt sich wie folgt zusammen:
- 62,00 Gew.-Teile    Primal AC 6501
-  8,00 Gew.-Teile    Iriodin 121 Rutil Glanzsatin
-  1,00 Gew.-Teile    Iriodin 205
-  0,15 Gew.-Teile    Schwarzpaste 1A)
-  1,00 Gew.-Teil     Byk Entschäumer-W
-  1,00 Gew.-Teil     Surfynol 104/50%ig in Propandiol-1,2
-  3,00 Gew.-Teile    Ethylenglykolmonobutylether
-  3,00 Gew.-Teile    Primal RM-8
- 10,00 Gew.-Teile    Propandiol-1,2
- 10,65 Gew.-Teile    vollentsalztes Wasser
-  0,20 Gew.-Teile    Mergal AF

Nach Applikation, wie in 1.2 und 1.3 beschrieben, erhält man homogene, seidenglänzende Oberflächen mit einem silbermetallartigen Erscheinungsbild.

**BAD ORIGINAL**

1.5 Metalleffekt Kupfer

in 60,50 Gew.-Teile Primal AC 6501 werden zur
Farbgebung folgende Pigmente bzw. Pigmentpasten
gegeben:

- 4,00 Gew.-Teile Rotpaste 1B)
- 1,00 Gew.-Teil Schwarzpaste 1A)
- 0,50 Gew.-Teile Colanylrot TG
- 4,00 Gew.-Teile Iriodin 205
- 2,00 Gew.-Teile Iriodin 101 Rutilsilber

Zur Entschäumung werden je 1 Gew.-Teil Byk Ent-
schäumer-V und Surfynol 104 (50%ig in Propan-
diol-1,2) zugesetzt und mit einem Gemisch aus 3
Gew.-Teilen Ethylenglykolmonobutylether, 3 Gew.-
Teilen Primal RH-8, 10 Gew.-Teilen Propandiol-1,2
und 9,80 Gew.-Teilen Wasser auf die gewünschte
Viskosität gebracht.

Wie üblich, werden 0,20 Gew.-Teile Mergal AF als
Konservierungsmittel zugesetzt.

Die Applikation erfolgt wie in den vorhergehenden
Beispielen beschrieben und ergibt einen gleichmäßigen, frischpoliertem Kupfer gleichenden Überzug.

1.6 Metalleffekt Bronze

Einen Dispersionlack, der einen bronzemetallartigen Oberflächeneffekt liefert, erhält man
aus folgenden Komponenten:

- 60,50 Gew.-Teile Primal AC 6501
- 7,00 Gew.-Teile Iriodin 205
- 2,00 Gew.-Teile Schwarzpaste 1A)
- 2,00 Gew.-Teile Rotpaste 1C)
- 0,30 Gew.-Teile Colanylgelb G 30

- 0,60 Gew.-Teile     Colanylrot TG
- 0,10 Gew.-Teile     Colanylschwarz PR
- 1,00 Gew.-Teil     Byk Entschäumer-W
- 1,00 Gew.-Teil     Surfynol 104 (50%ig in Propandiol-1,2
- 3,00 Gew.-Teile     Ethylenglykolmonobutyl-ether
- 3,00 Gew.-Teile     Primal RM-8
- 10,00 Gew.-Teile     Propandiol-1,2
- 9,30 Gew.-Teile     vollentsalztes Wasser
- 0,20 Gew.-Teile     Mergal AF

Der Lack läßt sich - wie in 1.2 beschriebenrollen, streichen und spritzen und ergibt homogene, seidenglänzende Oberflächen.

Beispiel 2:
Metalliceffekt-Lacke

2.1 Pigmentpasten

Folgende Pigmentpasten werden in den unter 2.2 bis 2.5 beschriebenen Metallic-Malerlacken verwendet:

2A) Grünpaste, bestehend aus:
- 91,77 Gew.-%     Neocryl XK 70
- 1,29 Gew.-%     Surfynol 104 (50%ig in Propandiol-1,2)
- 6,94 Gew.-%     Heliogengrün 8712 L

2B) Blaupaste, bestehend aus:
- 91,00 Gew.-%     Neocryl XK 70
- 9,00 Gew.-%     Heliogenblau 6975 LF (einge-tragenes Warenzeichen)

2C) Schwarzpaste, bestehend aus:
- 97,56 Gew.-%     Neocryl XK 70
- 2,44 Gew.-%     Russ FW-200

2.2 Dispersionslack Grün-goldmetallic

60 Gew.-Teile Neocryl XK 70 werden zur Pigmentierung mit 8 Gew.-Teilen Iriodin 205, 2 Gew.-Teilen Iriodin 235, 10 Gew.-Teilen der Grünpaste 2A) und 1 Gew.-Teil der Schwarzpaste 2C) versetzt.

Zur Entschäumung wird je 1 Gew.-Teil Byk-Entschäumer-W und Surfynol 104 (50%ig in Propandiol-1,2) zugegeben und die Mischung mit einer Lösung aus 3 Gew.-Teilen Ethylenglykolmonobutylether, 3 Gew.-Teilen Borchigel L-75, 5 Gew.-Teilen Propandiol-1,2 und 5,8 Gew-Teilen vollentsalztem Wasser verdickt. Zur Konservierung werden 0,2 Gew.-Teile Mergal AF zugesetzt.

Der Lack läßt sich wie bei 1.2 bis 1.6 beschrieben applizieren. Man erhält auf diese Weise einen Überzug, der einen ausgeprägten Grün-goldmetallic Changiereffekt aufweist.

2.3 Dispersionslack Grün-silbermetallic

Ein grün-silbermetallic-farbener Dispersionslack setzt sich zusammen aus:

- 60,00 Gew.-Teilen    Neocryl XK 70
-  5,00 Gew.-Teilen    Iriodin 235
-  5,00 Gew.-Teilen    Iriodin 105
-  4,00 Gew.-Teilen    Grünpaste 2A)
-  0,20 Gew.-Teilen    Colanylschwarz PR
-  0,50 Gew.-Teilen    Colanylgrün GG (eingetragenes Warenzeichen)
-  1,00 Gew.-Teile     Byk Entschäumer-W
-  1,00 Gew.-Teile     Surfynol 104 (50%ig in Propandiol-1,2)
-  3,00 Gew.-Teilen    Ethylenglykolmonobutylether
-  3,00 Gew.-Teilen    Borchigel L-75 (eingetragenes Warenzeichen) als Verdickungsmittel

- 10,00 Gew.-Teilen    Propandiol-1,2
- 7,10 Gew.-Teilen    vollentsalztes Wasser
- 0,20 Gew.-Teilen    Mergal AF

Alle Komponenten werden analog zu 2.2 zusammengegeben. Nach der Applikation erhält man eine homogene, seidenglänzende Beschichtung, die ähnlich einem konventionellen Metallicautomobillack einen grün-silberfarbenen Oberflächeneffekt aufweist.

2.4 Dispersionslack Blau-silbermetallic
Folgende Bestandteile werden, wie in 2.2 ange-geben, vermischt:

- 60,00 Gew.-Teile    Neocryl XK 70
- 10,00 Gew.-Teile    Iriodin 105
- 10,00 Gew.-Teile    Blaupaste 2B)
- 0,20 Gew.-Teile    Colanylschwarz PR
- 1,00 Gew.-Teil    Byk Entschäumer-W
- 1,00 Gew.-Teil    Surfynol 104 (50%ig in Propandiol-1,2)
- 3,00 Gew.-Teile    Ethylenglykolmonobutylether
- 3,00 Gew.-Teile    Borchigel L-75
- 5,00 Gew.-Teile    Propandiol-1,2
- 6,60 Gew.-Teile    vollentsalztes Wasser
- 0,20 Gew.-Teile    Mergal AF

Der so erhaltene Dispersionslack ergibt gleich-mäßige, blau-silbermetallic changierende Ober-flächen.

2.5 Dispersionslack Blau-goldmetallic
Einen blau-goldmetallic changierenden Malerlack erhält man durch das Zusammengeben folgender Komponenten:

0082497

- 60,00 Gew.-Teile    Neocryl XK 70
- 8,00 Gew.-Teile    Iriodin 205
- 2,00 Gew.-Teile    Iriodin 225
- 10,00 Gew.-Teile    Blaupaste 2B)
- 0,20 Gew.-Teile    Colanylschwarz PR
- 1,00 Gew.-Teil    Byk Entschäumer-W
- 1,00 Gew.-Teil    Surfynol 104 (50%ig in Propandiol-1,2)
- 3,00 Gew.-Teile    Ethylenglykolmonobutylether
- 3,00 Gew.-Teile    Borchigel L-75
- 5,00 Gew.-Teile    Propandiol-1,2
- 6,60 Gew.-Teile    vollentsalztes Wasser
- 0,20 Gew.-Teile    Mergal AF

Mit diesem Lack läßt sich ein intensiv blau-goldmetallic Changiereffekt erzielen. Die Oberflächen zeigen einen gleichmäßigen Seidenglanz und weisen eine gute Beständigkeit auf.

Patentansprüche:

1.) Wäßriges Anstrichmittel mit Metallglanzeffekt
enthaltend organische Bindemittel, Farbstoffe
und/oder Farbpigmente sowie gegebenenfalls
übliche lacktechnische Zusatzstoffe, d a d u r c h
g e k e n n z e i c h n e t , daß das Anstrichmittel Interferenzpigmente aus mit Titandioxid
beschichteten Glimmerplättchen enthält.

2.) Anstrichmittel nach Anspruch 1, dadurch gekennzeichnet, daß die Glimmerplättchen eine Dicke
von 150 bis 400 nm , eine Breite von 5 bis 150 µm
und eine Länge von 5 bis 150 µm aufweisen, und
die Titandioxidbeschichtung eine Stärke von 40
bis 300 nm hat.

3.) Gegenstand, versehen mit einem Anstrichmittelüberzug aus einem Anstrichmittel nach Anspruch 1.

4.) Verwendung von Interferenzpigmenten aus mit
Titandioxid beschichteten Glimmerplättchen
als Metallglanzeffektpigment für wäßrige Anstrichmittel.

-18-

Dr.T/K

**0082497**

Nummer der Anmeldung

| ))) Europäisches Patentamt | **EUROPÄISCHER RECHERCHENBERICHT** | |

| **EINSCHLÄGIGE DOKUMENTE** | | | EP 82111726.4 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US - A - 3 970 627 (SEYMUS)<br><br>* Anspruch 1; Spalte 3, Zeilen 28-45 *<br><br>---- | 1-4 | C 09 D 5/28<br>C 09 D 17/00<br>C 09 C 3/06<br>C 09 C 1/28 |

| RECHERCHIERTE SACHGEBIETE (Int. Cl. ³) |
|---|
| C 09 D<br>C 09 C |

Der vorliegende Recherchenbericht wurde für alle Patentansprüche erstellt.

| Recherchenort | Abschlußdatum der Recherche | Prüfer |
|---|---|---|
| WIEN | 25-03-1983 | PAMMINGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument. das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82